(19) Europäisches Patentamt
European Patent Office
Office européen des brevets

(11) Veröffentlichungsnummer: **0 468 140 A2**

(12) **EUROPÄISCHE PATENTANMELDUNG**

(21) Anmeldenummer: **91105997.0**

(22) Anmeldetag: **16.04.91**

(51) Int. Cl.5: **C08K 9/06**, C09C 1/48, C09C 3/12

(30) Priorität: **25.07.90 DE 4023537**

(43) Veröffentlichungstag der Anmeldung: **29.01.92 Patentblatt 92/05**

(84) Benannte Vertragsstaaten: **DE ES FR GB IT NL**

(71) Anmelder: **Degussa Aktiengesellschaft**
**Weissfrauenstrasse 9**
**W-6000 Frankturt am Main 1(DE)**

(72) Erfinder: **Wolff, Siegfried, Dr.**
**Weiherstrasse 28**
**W-5303 Bornheim-Merten(DE)**
Erfinder: **Görl, Udo, Dr.**
**Ouittenstrasse 36**
**W-5309 Meckenheim(DE)**

(54) **Mit Organosiliciumverbindungen chemisch modifizierte Russe, Verfahren zu deren Herstellung und deren Verwendung.**

(57) Mit Organosiliciumverbindungen modifizierte Ruße Verfahren zu ihrer Herstellung und ihre Verwendung in Kautschukmischungen.

Die Erfindung betrifft die Umsetzungsprodukte aus der Reaktion zwischen einem Ruß und einer oder mehreren Organosilicumverbindung(en) der allgemeinen Formeln

$$\left[ R_n^1 (RO)_{3-n} \; Si-(Alk)_m-(Ar)_p \right]_q \left[ B \right] \qquad (I),$$

$R_n^1$ $(RO)_{3-n}$ Si-(Alkyl) (II),

oder

$R_n^1$ $(RO)_{3-n}$ Si-(Alkenyl) (III),

die Herstellung dieser Produkte und ihre Verwendung als aktive Füllstoffe in mit Schwefel oder Peroxid vernetzbaren Kautschukmischungen, Rußsuspensionen und Kunststoffmischungen.

EP 0 468 140 A2

Die Erfindung betrifft ein Verfahren zur Herstellung von mit Organosiliciumverbindungen an der Oberfläche chemisch modifizierten Rußen, diese modifizierten Füllstoffe selbst und ihre Verwendung in vulkanisierbaren Kautschukmischungen,Kunststoffmischungen und Rußsuspensionen.

Es ist schon lange bekannt (US-PS 3,227,675 EP-PS 177674, EP-PS 0126 871) oxidische Oberfläche mit Alkoxygrupen-haltigen Organosiliciumverbindungen zu behandeln. Ziel all dieser Bemühungen war und ist es, einen Verbund zwischen der anorganischen Komponente, dem oxidischen Füllstoff, seien es nun z.B. Glas oder auch silikatische Füllstoffe, wie sie z. B. in der Gummi-Industrie (gefällte und pyrogene Kieselsäuren, Clays, Aluminiumsilikate etc.) Verwendung finden, und einem organischen Polymeren unterschiedlichster chemischer Zusammensetzung zu erzeugen. Dies führt in der Regel zu einer Verbesserung der Vulkanisateigenschaften.

Ruße, z. B. Furnaceruße, Flammruße und Gasruße, zählen nicht zu den oxidischen Füllstoffen.

Die bei diesen Substanzen ablaufende Reaktion zwischen den Alkoxysilylgruppen und den OH-Gruppen auf der Oberflaeche kann am Ruß nicht stattfinden und läßt daher den Aufbau einer chemischen Bindung zwischen Ruß und Organosiliciumverbindung als nicht möglich erscheinen.

Aus der DE-PS 2747 277 (≙ US-PS 4,128 438) sind zwar granulatförmige Abmischungen von Ruß und Organosiliciumverbindungen bekannt, diese werden aber nur dazu verwendet, die Organosiliciumverbindung auf einem wirksameren Weg in Kieselsäure-haltige Kautschukmischungen einzuarbeiten.

In diesem Falle ist Ruß nur Träger für flüssige Organosilane, um diese in den festen Zustand zu überführen. Das Silan kann von solchen Gemischen durch Extraktion mit org. Lösungsmitteln entfernt werden.

Nachdem man bisher immer versucht hat, die Eigenschaftenschaften von Rußgefüllten Kautschukvulkanisaten über den Einsatz von Rußen unterschiedlicher Struktur und unterschiedlicher Größe der spez. Oberfläche einzustellen, stellt sich nun die Aufgabe, über den Einsatz silanmodifizierter Ruße die Vulkanisateigenschaften zu verbessern.

Es wurde nun gefunden, daß sich bei geeigneter Vorgehensweise nicht unerhebliche Mengen an Organosiliciumverbindungen, abhängig von der Oberfläche und der Struktur des Rußes, aber auch von der Art der Verbindungen, auf dem Ruß binden lassen.

Gegenstand der Erfindung sind mit einer oder mehreren Organosiliciumverbindung(en) der allgemeinen Formeln

$$\left[ R^1_n\ (RO)_{3-n}\ Si-(Alk)_m-(Ar)_p \right]_q \left[ B \right] \qquad (I)$$

$R^1_n\ (RO)_{3-n}$ Si-(Alkyl) (II)

oder

$R^1_n\ (RO)_{3-n}$ Si-(Alkenyl) (III),

in denen bedeuten

| | |
|---|---|
| B: | -SCN, -SH, -Cl, $-NH_2$ (wenn q = 1) oder - Sx- (wenn q = 2) |
| R und $R^1$: | eine Alkylgruppe mit 1 bis 4 Kohlenstoffatomen, den Phenylrest, wobei alle Reste R und $R^1$ jeweils die gleiche oder eine verschiedene Bedeutung haben können, |
| R: | eine $C_1$ -$C_4$-Alkyl, -$C_1$ -$C_4$-Alkoxygruppe, |
| n: | 0; 1 oder 2, |
| Alk: | einen zweiwertigen geraden oder verzweigten Kohlenwasserstoffrest mit 1 bis 6 Kohlenstoffatomen, |
| m: | 0 oder 1 |
| Ar: | einen Arylenrest mit 6 bis 12 C-Atomen, bevorzugt C-Atome, |
| p: | 0 oder 1 mit der Maßgabe, daß p und n nicht gleichzeitig 0 bedeuten, |
| x: | eine Zahl von 2 bis 8, |
| Alkyl: | einen einwertigen geraden oder verzweigten ungesättigten Kohlenwasserstoffrest mit 1 bis 20 Kohlenstoffatomen, bevorzugt 1 bis Kohlenstoffatomen, |
| Alkenyl: | einen einwertigen geraden oder verzweigten ungesättigten Kohlenwaserstoffrest mit 2 bis 20 Kohlenstoffatomen, bevorzugt 2 bis Kohlenstoffatomen, |

chemisch modifizierte Ruße, auf deren Oberfläche 0,1 bis 15 Gew.-% einer oder mehrerer der genannten Organosiliciumverbindungen so gebunden sind, daß sie mit einem org. Lösungsmittel, insbesondere Diethylether,nicht extrahiert werden können.

Die Gew.-%-Angabe bezieht sich auf das Gesamtgewicht des modifizierten Füllstoffs.

Ein weiter Gegenstand der Erfindung ist ein Verfahren zur Herstellung der modifizierten Ruße, das dadurch gekennzeichnet ist, daß man ein homogenes Gemisch einer oder mehrerer Organosiliciumverbindungen gemäß den allgemeine Formeln (I) bis (III) mit dem vorgelegten Ruß herstellt, das Gemisch anschließend 1 bis 60 min bei 50 bis 160 $^0$C im Mischer selbst oder in einer anderen geeigneten Temperiereinheit z.B. Temperbett miteinander umsetzt und dann die gegebenenfalls nicht umgesetzte(n) Organosiliciumverbindung(en) mit einem org. Lösungsmittel extrahiert.
Als Ruße eignen sich die in der Kautschuktechnologie bekannten Typen der verschiedenen Klassen z. B. Furnaceruße (Einteilung nach ASTM D 1765), Flammruße und Gasruße als auch Nichtgummiruße.

Nach der Umsetzung können sie pulverförmig (fluffy), verperlt oder als Granulat entsprechend dem Verwendungszweck eingesetzt werden.

Es hat sich gezeigt, daß die auf dem jeweiligen Ruß maximal bindbare und damit nicht mehr durch org. Lösungsmittel, insbesondere Diethylether extrahierbare Menge an Organosiliciumverbindung(en) auch das in Abhängigkeit von Ruß und Organosiliciumverbindung erzielbare Optimum an gummitechnischer Leistung zur Folge hat.
Darüber hinausgehende extrahierbare Mengen dieser Verbindung(en) führen nicht nur zu keiner weiteren Verbesserung der Vulkanisateigenschaften, sondern im Gegenteil zu einer Verschlechterung des gummitechnischen Eigenschaftsbildes.

Um die ansonsten aus den genannten Gründen sinnvolle Extraktion der überschüssigen Organosilanmengen vermeiden zu können, ermittelt man den in Abhängigkeit von den jeweils verwendeten Substanzen in wechselnden Mengen bindbaren Anteil der Organosiliciumverbindung(en).
Bei der technischen Durchführung des erfindungsgemäßen Verfahrens setzt man dann nur noch die auf diesen Weise ermittelten Mengen zur Umsetzung mit dem Ruß ein.
Die Angabe in Gew.-% betrifft die einzusetzende(n) Verbindung(en) gemäß den allgemeinen Formeln I bis - III.
Das in Pulverform anfallende Reaktionsprodukt kann anschließend nach bekannten Verfahren geperlt oder granuliert werden, wenn dies für die spätere Verwendung als zweckmäßig erscheint.

Ein weiterer Gegenstand der Erfindung ist die Verwendung der modifizierten Ruße in vulkanisierbaren, d.h. mit Schwefel aber auch mit Peroxid vernetzbaren Kautschukmischungen.

Die erfindungsgemäßen Umsetzungsprodukte werden der Kautschukmischung in einer Menge von 5 bis 400 Teilen, bezogen auf 100 Teile Kautschuk, insbesondere von 20 bis 200 Teilen, bezogen auf 100 Teile Kautschuk, zugesetzt.

Im Vergleich zu Mischungen mit unbehandelten Rußen führt ihre Verwendung u. a. zu einer deutlichen Verbeserung der Moduli, der Elastizität, der dynamischen Eigenschaften und des Verlustwinkels tan $\delta$Auch gegenüber dem Einsatz von Ruß/Organosiliciumverbindungs-Abmischungen ergeben sich unerwartete Verbesserungen des gummitechnischen Wertebildes.

Zu den geeigneten Kautschukarten zählen mit Schwefel sowie Vulkanisationsbeschleuniger(n) aber auch mit Peroxid zu Elastomeren vernetzbare Kautschuke und deren Gemische. Hierzu zählen die sogenannten Dienelastomere, also beispielsweise ölgestreckte natürliche und synthetische Kautschuke wie Naturkautschuke,Terpolymere aus Ethylen, Propylen und nichtkonjugierte Diene. Darüberhinaus Copolymere aus Ethylen und Propylen sowie Carboxylkautschuke,

Epoxykautschuke, Transpolypentamer, halogenierte Butylkautschuke, Kautschuke aus 2-Chlorbutatdien, Ethylvinylacetat-Copolymere, gegebenenfalls auch chemische Derivate des Naturkautschuks sowie modifizierte Naturkautschuke.
Des weiteren können die mit den erfindungsgemäßen silanmodifizierten Rußen versehenen Kautschukmischungen weitere in der Kautschukindustrie übliche Komponenten enthalten, wie z. B.

- zusätzliche Verstärkungssysteme, d. h. Furnaceruße, Chanelruße, Flammruße, Thermalruße, Acetylenruße, Lichtbogenruße, CK--Ruße usw. sowie syynthetische Füllstoffe wie Kieselsäuren, Silikate, Aluminiumoxidhydrate, Calciumcarbonate, natürliche Füllstoffe wie Clays, Kieselkreiden, Kreiden, Talke usw sowie silanmodifizierte weiße Füllstoffe. Die Gesamtmenge derFüllstoffe incl. der modifizierten Ruße überschreitet aber nicht die vorne angegebenen Obergrenzen von 400 bzw. 200 Teilen pro 100 Teilen Kautschuk.
- Übliche in der Kautschukindustrie verwendete Vulkanisationsbeschleuniger (z. B. Sulfenamide, 2-Mercaptorbenzthiazol (MBT), Di-2-benzothiazyldisulfid (MBTS, Triazinbeschleuniger,Thiurame) alleine oder im Gemisch in Mengen von 0,1 bis 10 GT bezogen auf 100GT Kautschuk.

- Vulkanisationsverzögerer wie z. B. Vulkalent E, Di-(phenylthio)acetamid (PVI), ebenfalls in Mengen von 0,1 bis 10 GT Bezogen auf 100 GT Kautschuk.
- Zinkoxid und Stearinsäure als Promotoren der Vulkanisation in Mengen von 0,5 bis 10 GT bezogen auf 100 GT Kautschuk.
- In der Kautschukindustrie verwendete Alterungs-, Ozon-, Ermüdungsmittel wie z. B. N-Isopropyl-N'-phenyl-p-phenylendiamin (IPPD), Poly-2,2,4-trimethyl-1,2-dehydrochinolin (TMQ) sowie auch Wachse als Lichtschutzmittel und deren Verschnitte.
- Beliebige Weichmacher wie z. B. aromatische, naphthenische, paraffinische, synthetische Weichmacher und deren Verschnitte.
- Gegebenfalls Silane wie z. B. Bis(3-triethoxysilylpropyl)etrasulfan, γ-Chlorpropyltriethoxysilan, γ-Mercaptopropyltrimethoxysilan, Vinyltrialkoxysilane und deren Verschnitte in einer Menge von 0,1 bis 20 GT, bevorzugt 1 bis 10 GT, je 100 GT Füllstoff.
- Gegebenfalls Schwefel in einer Menge von 0,1 bis 10 GT je 100 GT Kautschuk.
- Gegebenenfalls Farbstoffe und Verarbeitungshilfsmittel in der üblichen Dosierung.

Die Mischungsherstellung erfolgt in der in der Gummiindustrie bekannten Art und Weise in einem Innenmischer oder auf einem Walzwerk.

Der Anwendungsbereich der erfindungsgemäßen silanmodifizierten Ruße erstreckt sich auf Mischungen, wie sie üblicherweise im Reifenbau, z. B. im Gürtel-, Karkass- und Wulstringbereich, in Seitenwand- und Haftmischungen eingesetzt werden sowie auf technische Artikel wie z. B. Fördergurte, Keilriemen, Schläuche, Dichtungen, motorlager, Feder- und Dämpfungselemente und gummibeschichtete Gewebe.

| Prüfnormen für die Anwendung: | |
|---|---|
| | Prüfmethode |
| Rheometer | DIN 53 529 |
| Mooney-Prüfung | DIN 53 524 |
| Zugefestigkeit | DIN 53 504 |
| Bruchdehnung | DIN 53 507 |
| Modul 100 %, 200 %, 300% | DIN 53 507 |
| Weiterreißwiderstand | DIN 53 507 |
| Firestone Ball-Rebound | AD 20 245 |
| Shore-A-Härte | DIN 53 505 |
| Abrieb | DIN 53 516 |
| Goodrich-Flexometer | ASTM D 623-62 |
| Heat build-up | DIN 53 513 |
| M T S | DIN 53 513 |

| Verwendete Ausgangs- und Rohstoffe: | |
|---|---|
| Buna® AP 451 | EPDM |
| RSS 1 | ribbed smoked sheet (Naturkautschuk) |
| SMR CV | Standard Malaysian Rubber (Constant Viscosity) |
| Naftolen ZD | aromatischer Weichmacher |
| Sunpar 2280 | parafinischer Weichmacher |
| Protector ® G35 | Ozonschutzwachs |
| Structol ® 60 NS | Homogenisierungsharz |
| Vulkanox ® HS | 2,2,4-Trimethyl-1,2-dihydrochinolin |
| Vulkanox ® 4010 | N-Isopropyl-N'-phenyl-p-phenylendiamin |
| Vulkacit ® MOZ | Benzothiazyl-2-Sulfenmorpholid |
| Vulkacit ® L | Zink-N-dimethyldithiocarbamat |
| Vulkacit ® CZ | Benzothiazyl-2-cyclohexylsulfenamid |
| Vulkacit ® DM | Dibenzothiazyldisulfid |
| Si 69 | Bis(3-triethoxysilylpropyl)tetrasulfan |
| Si 264 | 3-Thiocyanatopropyltriethoxysilan |
| Si 230 | 3-Chlorpropyltriethoxysilan |
| Si 221 | 3-Butenyltriethoxysilan |

I. Herstellungsbeispiel für silanmodifizierte Ruße

In ein mit einem doppelstückigen Variant-Mischwerkzeug mit Horn, einem im Deckel montierten Leitblech mit Temperaturmesser, einer Entlüfung und einem Hohlmantel zwecks Temperierung durch Dampf oder Wasser ausgerüsteten Henschel F.M. 40 Liter-Mischaggregat werden 500 g CORAX ® N110 (140 $m^2$/g BET-Oberfläche) eingefüllt.

1. Stufe: Nach dem Verschließen des Deckels wird die Drehzahl des Mischwerkzeugs auf 2.600 Upm gebracht, Bei Raumtemperatur (ca. 20 bis 25 $^0$C) werden 60 g Si 69 auf den Füllstoff gesprüht, das Gemisch homogenisiert und anschließend aus dem Mischer entfernt.

2. Stufe: Nach dem Aufwärmen des Mischers auf 120 $^0$ C wird das Mischgut aus Stufe 1 wiederum in den Mischer gefüllt und dessen Drohzahl auf 2.600 Upm gebracht. Nach Erreichen einer Temperatur von 130 $^0$ C wird das Mischaggregat abgeschaltet und nach einer Gesamtverweilzeit von 10 Minuten entleert.

Das Verfahren ist für alle Ruße und Silane identisch.

II. Ermittlung der auf Ruß bindbaren Silanmenge 150 g des nach Beipiel 1 hergestellten Ruß/Silan-Produktes werden 24 Stunden mit 500 ml trockenem Ether unter Rückfluß mittels einer Soxlett-Apparatur extrahiert. Durch dieses Verfahren wird die nicht mit dem Ruß reagierte Silanmenge entfernt.

Nach dem Trocknen des so behandelten Ruß/Silan-Produktes im Wasserstrahlvakuum bei 40 $^0$ C wird die auf Ruß gebundene Silanmenge quantitativ bestimmt. Das verwendete Analysenverfahren richtet sich hierbei nach der Art, d.h. der chemischen Struktur, des aufgebrachten Silans.

Zur Ermittlung der Konzentration wird bei polysulfidischen Silanen (z. B. Bis(3-triethoxysilylpropyl)-tetrasulfan) eine Polysulfidbestimmung, bei schwefelhaltigen Silanen (z. B.$\gamma$ -Mercaptotrimethoxypropylsilan, 3-Thiocyanatopropyltriethoxysilan) eine Schwefelbestimmung nach DIN 53 584, bei chlorhaltigen Silanen (z. B. 3-Chlorpropyltriethoxysilan) eine Chlorbestimmung durchgeführt und bei alkyl- und alkenylhaltigen Silanen (z. B. Propyltriethoxysilan, Octyltriethoxysilan, Hexadecyltrimethoxysilan, Triethoxyvinylslan, Butenyltriethoxysilan) der Veraschungsrückstand bestimmt.

Repräsentativ für alle vier Gruppen wurde ein Silan ausgewählt und dessen bindbare Menge auf ebenfalls repräsentativ ausgewählten Rußen bestimmt.

| Bezeichnung | $N_2$-Oberfl. | DBP | bindbare Menge an Silan in Gewichtsteilen auf 100 Gewichtsteile Ruß |
|---|---|---|---|
| Ruß/Polysulfidsilan | | | |
| PRINTEX(R) 90 / Si 69 | 300 | 800 | 4.7 |
| CORAX(R) N110 / Si 69 | 145 | 114 | 3.3 |
| CORAX N220 / Si 69 | 115 | 114 | 2.7 |
| CORAX N234 / Si 69 | 125 | 125 | 2.3 |
| CORAX N375 / Si 69 | 96 | 114 | 2.4 |
| CORAX N330 / Si 69 | 82 | 102 | 1.7 |
| CORAX N326 / Si 69 | 83 | 72 | 2.1 |
| CORAX N550 / Si 69 | 42 | 121 | 1.5 |
| CORAX N660 / Si 69 | 35 | 90 | 1.7 |
| CORAX N683 / Si 69 | 37 | 133 | 0.9 |
| CORAX N765 / Si 69 | 35 | 122 | 0.8 |
| DUREX(R) 0 / Si 69 | 20 | 104 | 0.4 |
| Schwefelhaltige Silane | | | |
| CORAX N539 / Si 264 | 41 | 111 | 1.8 |
| CORAX N550 / Si 264 | 42 | 121 | 3.7 |
| CORAX N683 / Si 264 | 37 | 133 | 1.7 |
| Chlorhaltiges Silan | | | |
| CORAX N330 / Si 230 | 82 | 102 | 0.9 |
| CORAX N539 / Si 230 | 41 | 111 | 0.9 |
| CORAX N683 / Si 230 | 37 | 133 | 0.6 |
| Alkenylgruppenhaltige Silane | | | |
| CORAX N550 / Si 221 | 42 | 121 | 0.7 |
| CORAX N539 / Si 221 | 41 | 111 | 0.7 |
| PRINTEX XE-2/Si 221 | 1000 | 400 | 5.3 |

III. Vergleich zwischen N110 und Si 69 mod. N110 in einer LKW-Lauffläche auf Basis NR

| | | 1 | 2 |
|---|---|---|---|
| RSS 1 ML(1+4) = 70-80 | | 100 | 100 |
| CORAX N110 | | 45 | - |
| Si 69 mod. N110 | | - | 45 |
| ZnO RS | | 4 | 4 |
| Stearinsäure | | 3 | 3 |
| Naftolen ZD | | 5 | 5 |
| Protector G 35 | | 1.5 | 1.5 |
| Vulkanox 4010 NA | | 2 | 2 |
| Vulkanox HS | | 1 | 1 |
| Vulkacit MOZ | | 1.18 | 1.18 |
| Schwefel | | 1.07 | 1.07 |
| **Rheometer:** 145°C | | | |
| $D_{min}$ | (Nm) | 0.93 | 0.93 |
| $D_{max} - D_{min}$ | (Nm) | 7.10 | 7.54 |
| $t_{10\,\%}$ | (min) | 12.7 | 11.1 |
| $t_{90\,\%}$ | (min) | 20.8 | 20.1 |
| $t_{90\,\%} - t_{10\,\%}$ | (min) | 8.1 | 9.0 |
| Reversion | (%) | 2.5 | 2.4 |
| **Mooney-Viskosität** | | | |
| ML (1+4) (100°C) | (ME) | 75 | 76 |

**Vulkanisatdaten:** 145°C, $t_{95}$ %

| | | 1 | 2 |
|---|---|---|---|
| Zugfestigkeit | (MPa) | 24.6 | 28.5 |
| Modul 100 % | (MPa) | 1.7 | 2.0 |
| Modul 200 % | (MPa) | 4.4 | 5.1 |
| Modul 300 % | (MPa) | 8.4 | 10.0 |
| Bruchdehnung | ( % ) | 580 | 610 |
| Bruchenergie | ( J ) | 18.4 | 22.9 |
| Ball-Rebound | ( % ) | 42.2 | 44.9 |
| Shore-A-Härte | ( - ) | 62 | 64 |
| Abrieb | ($mm^3$) | 104 | 96 |

**Goodrich-Flexometer:** (RT, 108 N, 0.175 inch, 18 h)

| | | | |
|---|---|---|---|
| delta T Center | (°C ) | 112.5 | 89.0 |
| Dyn. Compression | ( % ) | 34.7 | 27.2 |

**M T S - Prüfung**

| | | | | |
|---|---|---|---|---|
| Dyn. Dehnmodul E* | (MPa) | 0°C | 11.9 | 12.2 |
| | | 60°C | 7.5 | 8.1 |
| Verlustwinkel tan δ | | 0°C | 0.254 | 0.241 |
| | | 60°C | 0.138 | 0.122 |

Das Beispiel zeigt, daß silanmodifizierte Ruße zu deutlich verbesserten Werten bei der Vernetzungsausbeute, beim Modul, bei der Zugfestigkeit, bei der Elastizität, bei den dynamischen Daten und beim Verlustwinkel tan δ gegenüber der Nullmischung führen.

IV. Vergleich zwischen PRINTEX 90 und Si 69 mod. PRINTEX 90 in einer LKW-Lauffläche auf Basis NR

| | | 1 | 2 |
|---|---|---|---|
| RSS 1 ML(1+4) = 70-80 | | 100 | 100 |
| PRINTEX 90 | | 45 | - |
| Si 69 mod. PRINTEX 90 | | - | 45 |
| ZnO RS | | 4 | 4 |
| Stearinsäure | | 3 | 3 |
| Naftolen ZD | | 5 | 5 |
| Protector G 35 | | 1.5 | 1.5 |
| Vulkanox 4010 NA | | 2 | 2 |
| Vulkanox HS | | 1 | 1 |
| Vulkacit CZ | | 1.18 | 1.18 |
| Schwefel | | 1.07 | 1.07 |
| **Rheometer:** 145°C | | | |
| $D_{min}$ | (Nm ) | 1.23 | 1.31 |
| $D_{max} - D_{min}$ | (Nm ) | 6.30 | 7.00 |
| $t_{10\%}$ | (min) | 14.2 | 10.3 |
| $t_{90\%}$ | (min) | 22.1 | 20.7 |
| $t_{90\%} - t_{10\%}$ | (min) | 8.0 | 10.4 |
| Reversion | ( % ) | 4.8 | 2.4 |
| **Mooney-Viskosität** | | | |
| ML (1+4) (100°C) | (ME ) | 71 | 78 |

Vulkanisatdaten: 145°C, $t_{95}$ %

| | | | 1 | 2 |
|---|---|---|---|---|
| Zugfestigkeit | (MPa) | | 24.8 | 24.5 |
| Modul 100 % | (MPa) | | 1.1 | 1.4 |
| Modul 200 % | (MPa) | | 2.0 | 2.8 |
| Modul 300 % | (MPa) | | 3.8 | 5.0 |
| Bruchdehnung | ( % ) | | 740 | 670 |
| Weiterreißwiderst. | (N/mm) | | 37 | 40 |
| Ball-Rebound | ( % ) | | 43.3 | 48.6 |
| Shore-A-Härte | ( - ) | | 59 | 61 |
| Abrieb | (mm³) | | 152 | 145 |
| Goodrich-Flexometer: (RT, 108 N, 0.175 inch, 18 h) | | | | |
| delta T Center | (°C ) | | 126.1 | 87.0 |
| Dyn. Compression | ( % ) | | 40.0 | 27.0 |
| M T S - Prüfung | | | | |
| Dyn. Dehnmodul E* | (MPa) | 0°C | 9.9 | 10.3 |
| | | 60°C | 6.4 | 7.2 |
| Verlustwinkel tan δ | | 0°C | 0.249 | 0.219 |
| | | 60°C | 0.131 | 0.117 |

Auch dieses Beispiel zeigt die gegenüber der Nullmischung deutlich verbesserten gummitechnischen Daten bei einer Silanmodifizierung des Rußes.

V. Vergleich von DUREX 0 und Si 69 mod. DUREX 0 in einer Gummi-Form-Artikel-Mischung auf Basis NR

| | 1 | 2 |
|---|---|---|
| RSS 1 ML(1+4) = 70-80 | 100 | 100 |
| DUREX 0 | 45 | - |
| Si 69 mod. DUREX 0 | - | 45 |
| ZnO RS | 4 | 4 |
| Stearinsäure | 2 | 2 |
| Naftolen ZD | 4 | 4 |
| Vulkanox HS | 2 | 2 |
| Vulkanox 4020 | 1 | 1 |
| Vulkacit MOZ | 0.8 | 0.8 |
| Schwefel | 2.5 | 2.5 |

<u>Rheometer:</u> 155°C

| | | 1 | 2 |
|---|---|---|---|
| $D_{min}$ | (Nm) | 0.31 | 0.33 |
| $D_{max} - D_{min}$ | (Nm) | 10.19 | 10.89 |
| $t_{10\,\%}$ | (min) | 7.9 | 7.1 |
| $t_{90\,\%}$ | (min) | 12.2 | 11.4 |
| $t_{90\,\%} - t_{10\,\%}$ | (min) | 4.4 | 4.3 |

Vulkanisatdaten: 155°C, $t_{95}$ %

| | | | 1 | 2 |
|---|---|---|---|---|
| Zugfestigkeit | (MPa) | | 18.2 | 18.4 |
| Modul 100 % | (MPa) | | 3.0 | 3.3 |
| Modul 200 % | (MPa) | | 6.3 | 6.6 |
| Modul 300 % | (MPa) | | 9.9 | 10.2 |
| Bruchdehnung | ( % ) | | 490 | 480 |
| Shore-A-Härte | ( - ) | | 62 | 63 |
| **Goodrich-Flexometer:** (RT, 108 N, 0.175 inch, 18 h) | | | | |
| delta T Center | (°C ) | | 64.3 | 63.4 |
| Dyn. Compression | ( % ) | | 13.6 | 11.4 |
| **M T S - Prüfung** | | | | |
| Dyn. Dehnmodul E* | (MPa) | 0°C | 8.4 | 9.3 |
| | | 60°C | 7.4 | 8.6 |
| Verlustwinkel tan δ | | 0°C | 0.140 | 0.131 |
| | | 60°C | 0.059 | 0.053 |

Trotz der sehr geringen auf DUREX 0 bindbaren Si 69-Menge (0.4 GT) zeigen sich auch hier bereits deutliche Unterschiede im positiven Sinne zwischen der Nullmischung und dem silanmodifizierten Ruß.

VI. Vergleich zwischen silanmodifiziertem Ruß, bei dem die aufgegebene Silanmenge genau der bindbaren Menge entspricht und einem silanmodifizierten Ruß, bei dem die Silanmenge überdosiert wurde.

| | 1 | 2 |
|---|---|---|
| RSS 1 ML(1+4) = 70-80 | 100 | 100 |
| N110 / Si 69 (3.3 GT Si 69 auf 100 GT N110) | 46,5 | - |
| N110 / Si 69 (6.7 GT Si 69 auf 100 GT N110) | - | 48 |
| ZnO RS | 4 | 4 |
| Stearinsäure | 3 | 3 |
| Protector G 35 | 1.5 | 1.5 |
| Vulkanox 4010 NA | 2 | 2 |
| Vulkanox HS | 1 | 1 |
| Naftolen ZD | 5 | 5 |
| Vulkacit MOZ | 1.12 | 1.18 |
| Schwefel | 1.07 | 1.07 |

<u>Rheometer:</u> 145°C

| | | | |
|---|---|---|---|
| $D_{max} - D_{min}$ | (Nm ) | 7.92 | 7.84 |
| $t_{10\,\%}$ | (min) | 10.6 | 13.2 |
| $t_{95\,\%}$ | (min) | 29.1 | 46.7 |
| $t_{90\,\%} - t_{10\,\%}$ | (min) | 12.1 | 21.8 |

Vulkanisatdaten: 145°C, $t_{95}$ %

| | | 1 | 2 |
|---|---|---|---|
| Zugfestigkeit | (MPa) | 26.0 | 25.9 |
| Modul 300 % | (MPa) | 9.2 | 8.8 |
| Weiterreißwiderst. | (N/mm) | 34 | 29 |
| Shore-A-Härte | ( - ) | 64 | 64 |

Goodrich-Flexometer: (RT, 108 N, 0.175 inch, 18 h)

| | | | |
|---|---|---|---|
| delta T Center | (°C ) | 87.6 | 101.3 |
| Dyn. Compression | ( % ) | 20.7 | 22.3 |

Das Beispiel zeigt, daß bei einer Überdosierung des Silans über die auf N110 bindbare Menge hinaus das gummitechnische Wertebild verschlechtert wird. Besonders deutlich macht sich dies bei den kinetischen (sehr langsame Vulkanisationsgeschwindigkeit) und den dynamischen Daten (delta T Center steigt) bemerkbar.

VII. Vergleich zwischen Si 69 mod. N 375 und einer Si 69/N 375 50 : 50 Abmischung in einer Pkw-Lauffläche auf Basis SBR

| | 1 | 2 |
|---|---|---|
| Buna 1500 | 60 | 60 |
| Buna 1712 | 55 | 55 |
| N 375 | | 68,3 |
| Si 69 mod N 375 | 71,7 | - (= 1,7 Si 69) |
| Si 69/N 375 (50:50) | - | 3,4 |
| ZnO RS | 3 | 3 |
| Stearinsäure | 2 | 2 |
| Naftolen ZD | 12 | 12 |
| Vulkanox 4010 NA | 1,5 | 1,5 |
| Vulkanox HS | 1 | 1 |
| Protector G 35 | 1 | 1 |
| Vulkacit CZ | 2 | 2 |
| Schwefel | 1,8 | 1,8 |

Rheometer: 175 $^0$C

| | | |
|---|---|---|
| $t_{10\ \%}$ (min) | 5,4 | 5.2 |
| $t_{90\ \%}$ (min) | 6,1 | 8,5 |
| $t_{90\ \%}-t_{10\ \%}$ (min) | 2,4 | 2,4 |

| Mechanische Daten: 175 °C $t_{95\%}$ | | |
|---|---|---|
| Zugfestigkeit (MPa) | 20,3 | 19,0 |
| Modul 300 % (MPa) | 13,3 | 11,4 |
| Härte | 71 | 69 |
| Abrieb ($mm^3$) | 62 | 76 |
| Verlustwinkel tan δ 60 °C | 0,216 | 0,228 |
| Dyn. Dehnmodul (MPa) 0 °C | 42,0 | 39,1 |
| 60 °C | | |

Dieses Beispiel zeigt, daß die Verwendung der silanmodifizierten Ruße zu einem insgesamt verbesserten gummitechnischen Eigenschaftsbild der so erhaltenen Vulkanisate führt. Dies gilt ebenso für das folgende, auf EPDM/NR bezogene Beispiel.

VIII. Vergleich zwischen Si 69 / mod N 556 und einer Si 69/N 550 50 : 50 Abmischung in einer EPDM/NR Profil-Mischung

| | 1 | 2 |
|---|---|---|
| Buna AP 451 | 40 | 40 |
| SMR CV | 60 | 60 |
| ZnO RS | 5 | 5 |
| Stearinsäure | 2 | 2 |
| N 550 | - | 68,65 |
| Si 69 mod. N 550 | 71,35 | - |
| Si 69/N 550 | - | 2,7 |
| Sunpar 2280 | 25 | 25 |
| Structol 60 NS | 10 | 10 |
| Vulkacit L | 1 | 1 |
| Vulkacit CZ | 0,65 | 0,65 |
| Vulkacit DM | 0,6 | 0,6 |
| Schwefel | 1 | 1 |

Kinetik: 160 0 C

| | 1 | 2 |
|---|---|---|
| $t_{10\%}$ (min) | 1,3 | 14,5 |
| $t_{90\%}$ (min) | 5,9 | 14,5 |
| $t_{90\%}-t_{10\%}$ (min) | 4,7 | 13,1 |
| Mechanische Daten: 160 $^0$C, $t_{95\%}$ | | |
| Zugfestigkeit (MPa) | 7,8 | 7,3 |
| Modul 200 % (MPa) | 6,9 | 6,5 |
| Compression Set | | |
| 100 h/23 $^0$C (%) | 12,1 | 13,4 |
| 100 h/70 $^0$C (%) | 34,6 | 36,1 |

## Patentansprüche

**1.** Mit einer oder mehreren Organosiliciumverbindungen der allgemeinen Formeln

$$\left[R^1{}_n-(RO)_{3-n}\ Si-(Alk)_m-(Ar)_p\right]_q \left[B\right] \quad (I),$$

$R^1{}_n\ (RO)_{3-n}$ Si-(Alkyl) (II),

oder

$R^1{}_n\ (RO)_{3-n}$ Si-(Alkenyl) (III),

in denen bedeuten

B: -SCN, -SH, -Cl, $-NH_2$ (wenn q = 1) oder -Sx- (wenn q = 2)

R und $R^1$: eine Alkylgruppe mit 1 bis 4 Kohlenstoffatomen, den Phenylrest, wobei alle Reste R und $R^1$ jeweils die gleiche oder eine verschiedene Bedeutung haben können,

R: eine $C_1$-$C_4$-Alkyl, -$C_1$-$C_4$-Alkoxygruppe,

n: 0; 1 oder 2,

Alk: einen zweiwertigen geraden oder verzweigten Kohlenwasserstoffrest mit 1 bis 6 Kohlenstoffatomen,

| | |
|---|---|
| m: | 0 oder 1 |
| Ar: | einen Arylenrest mit 6 bis 12 C-Atomen, bevorzugt 6 C-Atome, |
| p: | 0 oder 1 mit der Maßgabe, daß p und n nicht gleichzeitig 0 bedeuten, |
| x: | eine Zahl von 2 bis 8, |
| Alkyl: | einen einwertigen geraden oder verzweigten ungesättigten Kohlenwasserstoffrest mit 1 bis 20 Kohlenstoffatomen, bevorzugt 2 bis 8 Kohlenstoffatomen, |
| Alkenyl: | einen einwertigen geraden oder verzweigten ungesättigten Kohlenwaserstoffrest mit 2 bis 20 Kohlenstoffatomen, bevorzugt 2 bis 8 Kohlenstoffatomen, |

chemisch modifizierte Ruße, auf deren Oberfläche 0,1 bis 15 Gew.-% einer oder mehrerer der genannten Organosiliciumverbindungen so gebunden sind, daß sie mit org. Lösungsmitteln nicht extrahiert werden können.

**2.** Modifizierte Ruße gemäß Anspruch 1,
dadurch gekennzeichnet, daß sie in Pulverform, geperlt oder als Granulat vorliegen.

**3.** Verfahren zur Herstellung der modifizierten Ruße gemäß den Ansprüchen 1 oder 2,
dadurch gekennzeichnet, daß man ein homogenes Gemisch einer oder mehrerer der Organosiliciumverbindung(en) gemäß den allgemeinen Formeln (I) bis (III) mit dem vorgelegten Ruß herstellt, das Gemisch anschließend 1 bis 60 min bei 50 bis 160 $^{0}$c in einem Mischer miteinander umsetzt und dann die gegebenenfalls nicht umgesetzten Organosilicium-verbindung(en) mit einem org. Lösungsmittel extrahiert.

**4.** Verfahren gemäß Anspruch 3.
dadurch gekennzeichnet, daß man den in Pulverform erhaltenen modifizierten Ruß perlt oder in ein Granulat überführt.

**5.** Verwendung der modifizierten Füllstoffe gemäß einem der Ansprüche 1 oder 2 in vulkanisierbaren Kautschukmischungen, Kunststoffmischungen und Rußsuspensionen.